# EUROPÄISCHE PATENTSCHRIFT

(11) **EP 0 498 021 B1**
(45) Veröffentlichungstag und Bekanntmachung des Hinweises auf die Patenterteilung: **26.01.1994**
(21) Anmeldenummer: 91102523.7
(22) Anmeldetag: 21.02.1991
(51) Int. Cl.: E06B 5/16

(54) **Brandschutzverglasung**
Fireproof glazing
Vitrage coupe-feu

(30) Priorität: 08.02.1991 DE 9101452 U
(43) Veröffentlichungstag der Anmeldung: 12.08.1992
(73) Patentinhaber: PROMAT GmbH, 40880 Ratingen (DE)
(72) Erfinder: Wiedemann, Günter, Dr., W-4000 Düsseldorf 12 (DE); Tente, Ulrich, W-4000 Düsseldorf 30 (DE)
(74) Vertreter: Stenger, Watzke & Ring Patentanwälte

(56) Entgegenhaltungen:
- DE-B- 2 507 244
- DE-U- 7 148 693
- DE-U- 8 024 086

## Beschreibung

Die Erfindung betrifft eine Brandschutzverglasung zur Vermeidung des Durchtritts von Feuer und Rauch im Brandfall aus einem Raum in einen anderen, mit mindestens einer Brandschutzscheibe, deren Rand zu beiden Seiten durch jeweils ein Profil abgedeckt ist, wobei zwischen der Stoßfläche der Brandschutzscheibe und der gegenuberliegenden Fläche eine Fuge verbleibt, die im Brandfall durch ein in der Brandschutzscheibe als Schutzwirkstoff enthaltenes, aufschäumendes Mittel feuer- und rauchdicht verschlossen wird.

Brandschutzverglasungen sind lichtdurchlässige Bauteile, die dazu bestimmt sind, entsprechend ihrer Feuerwiderstandsdauer nicht nur die Ausbreitung von Feuer und Rauch, sondern zusätzlich auch den unzulässigen Ubergang von Wärme zu verhindern. Gemäß DIN 4102, Teil 13, sind Brandschutzverglasungen der Feuerwiderstandsklasse F sowie der Feuerwiderstandsklasse G bekannt und in den jeweils gestellten Anforderungen erläutert.

Eine bekannte Brandschutzscheibe ist mehrlagig aus Glasscheiben mit einer jeweils dazwischen angeordneten Brandschutzschicht aufgebaut. Im Brandfall wird diese Brandschutzschicht aktiviert. Sie absorbiert die Wärmestrahlung und bildet eine hochwirksame Dämmschicht. Aus der ursprünglich transparenten Verglasung entsteht dabei eine praktisch undurchsichtige Feuerschutzwand.

Um derartige Brandschutzscheiben für eine komplette Brandschutzverglasung verwenden zu können, sind geeignete Halterungen erforderlich, die hinsichtlich ihrer Größe und ihrer brandschutztechnischen Eigenschaften auf die verwendeten Glasscheiben abgestimmt sind.

Eine bekannte Brandschutzverglasung verwendet eine Stahlrahmenkonstruktion, bei der die einzelnen Brandschutzscheiben durch Stahlhohlprofile miteinander verbunden sind, an denen die Brandschutzscheiben stoßseitig anliegen. Um im Brandfall eine Beschädigung der Stahlhohlprofile sowie ein Durchschlagen der Flammen im Bereich der Stoßfläche zu vermeiden, sind die Stahlhohlprofile beidseitig durch Streifen aus nicht brennbarem bzw. schwer entflammbarem Material abgedeckt und geschützt. Neben dem hohen Erstellungsaufwand hat diese bekannte Brandschutzverglasung den Nachteil, daß die Streifen aus nicht brennbarem bzw. schwer entflammbarem Material optisch wenig ansprechend aussehen, zumal sie im Vergleich zur Gesamtfläche der Brandschutzscheibe relativ breit ausfallen.

Eine andere Brandschutzverglasung verwendet eine zweiteilige Stahlrahmenkonstruktion, bei der der Raum zwischen den Stoßflächen zweier aneinandergrenzender Brandschutzscheiben durch eine Leiste aus nicht brennbarem bzw. schwer entflammbarem Material gefüllt ist. Auf diese Weise wird ein Wärmedurchgang durch die besonders gefährdete Stoßstelle zwischen aneinandergrenzenden Brandschutzscheiben verhindert. Zur Gewährleistung der erforderlichen mechanischen Stabilität sind die beiderseits der Leiste befindlichen Stahlprofile miteinander verschweißt. Diese geben der Rahmenkonstruktion zwar ein optisch ansprechendes Aussehen, jedoch ist es beim Erstellen dieser Rahmenkonstruktion von Nachteil, daß die Stahlprofile beidseitig der Leisten aus nicht brennbarem bzw. schwer entflammbarem Material miteinander verschweißt oder verschraubt werden müssen.

Weiterhin ist es bekannt, Stahlhohlprofile einer Brandschutzverglasung mit einer im Brandfall kühlenden Masse zu füllen. Die Kühlwirkung wird hierbei durch Abgabe von Feuchtigkeit, mithin also in einer Art Verdunstungskühlung, erreicht. Die Befestigung der Brandschutzscheiben erfolgt über Glashalteleisten, welche mit den Stahlhohlprofilen verschraubt sind. Diese Brandschutzverglasung hat den Nachteil, daß nur schwer abschätzbar ist, ob die in die Stahlhohlprofile eingefüllte Kühlmasse auf Dauer, d.h. auf Jahre hinaus, ihre Wirkung beibehält. Außerdem ergibt sich ein hohes Gesamtgewicht der Konstruktion, das die Handhabung und Verarbeitbarkeit erschwert.

Eine Brandschutzverglasung der eingangs genannten Art ist aus dem deutschen Gebrauchsmuster DE-U 71 48 693 bekannt. Dabei handelt es sich um eine verglaste Brandschutztür, deren allseitig umlaufender Rahmen aus jeweils zwei Metallprofilen zusammengesetzt ist. Der Rand der Brandschutzscheibe wird durch einen zwischen den beiden Metallprofilen ausgebildeten Kanal festgehalten, wobei zwischen der Stirn- bzw. Stoßfläche der Brandschutzscheibe und der gegenüberliegenden, an dem einen der beiden Metallprofile ausgebildeten Fläche eine schmale Fuge verbleibt. Im Brandfall schäumt infolge der Wärmeentwicklung ein in der Scheibe enthaltener Schutzwirkstoff auf, wobei dieser aus den Stoßflächen in die Fuge austritt und diese abdichtet. Die beiden Metallprofile sind durch Schrauben miteinander verbunden. Um kritische Wärmebrücken im Bereich der Anlageflächen der Metallprofile zu verhindern, befindet sich zwischen deren einander zugewandten Flächen eine Wärmedämmschicht in Form eines Anstrichs oder einer Isolierschicht.

Trotz Verwendung dieser Wärmedämmschicht bleibt die in der DE-U 71 48 693 beschriebene Brandschutzverglasung hinsichtlich ihrer brandschutztechnischen Eigenschaften unbefriedigend. Die Wärmedämmschicht ist relativ dünn ausgebildet, so daß Wärmeübergänge in erheblichem Maße auftreten. Hinzu kommt, daß die Verschraubung zwischen den beiden Metallprofilen eine weitere kritische Wärmebrücke bildet. Die bekannte Brandschutzverglasung weist infolge ihres relativ breit gestalteten Rahmens überdies auch gestalterische Nachteile auf.

Der Erfindung liegt die **Aufgabe** zugrunde, eine einfach aufgebaute Brandschutzverglasung zu schaffen, die Wärmebrücken vermeidet und deren Bauteile keine zusätzlichen Brandschutzmaßnahmen, wie Außen- oder Innenisolierung der tragenden Konstruktion erfordern. Die Brandschutzforderungen sollen trotz der wesentlich vereinfachten konstruktiven Gestaltung erfüllt werden, wobei zusätzlich auf eine optisch ansprechende Gestaltung Wert gelegt wird.

Die Aufgabe ist erfindungsgemäß dadurch gelöst, daß die beiden Profile ausschließlich über die als Isolierschicht dienende Brandschutzscheibe selbst miteinander verbunden sind, wobei die der Stoßfläche gegenüberliegende Fläche durch die benachbarte raumbegrenzende Struktur gebildet wird, z.B. eine weitere Brandschutzscheibe der Brandschutzverglasung oder Decke, Wand oder Boden des umgebenden Raumes.

Der Erfindung liegt die durch Versuche untermauerte Erkenntnis zugrunde, daß auch ohne zusätzliche Isolationsmaßnahmen in Form von Streifen oder Leisten aus nicht brennbarem bzw. schwer entflammbarem Material im Brandfall ein Durchschlagen von Flammen und Rauch sowie eine unzulässige Temperaturüberschreitung im Bereich der Rahmenteile nicht eintritt. Die Rahmenkonstruktion besteht jeweils aus zwei Profilen, die beiderseits der Brandschutzscheibe angeordnet sind. Deren Aufgabe ist es in erster Linie, die an der Stoßfläche der Brandschutzscheibe ausgebildete Fuge optisch zu verkleiden, so daß die Profile entsprechend schmal gehalten werden können, was dem ästhetischen Erscheinungsbild der Brandschutzverglasung als Ganzes zugute kommt. Außerdem übernehmen die Profile, insbesondere bei großflächigeren Verglasungen, auch eine Halte- und Stützfunktion. Schließlich sorgen sie dafür, einen anfänglichen Durchtritt von heißen Brandgasen durch die Fuge solange zu verhindern, bis sich die Fuge durch das im Brandfall aufschäumende Mittel selbst verschließt. Abweichend vom Stand der Technik ist eine zusätzliche Isolierung gegen einen Wärmedurchtritt durch die Profile nicht erforderlich, da bei der Erfindung zwei vollkommen voneinander getrennte Profile verwendet werden, die miteinander nicht in thermischem Kontakt stehen und daher keine Hitzebrücke bilden. Dies wird erreicht, indem die beiden Profile ausschließlich über die als Isolierschicht dienende Brandschutzscheibe selbst miteinander verbunden sind. Damit entfallen zusätzliche Isolationsmaßnahmen zwischen den Profilen; auch eine Außenisolierung der Profile ist nicht erforderlich. Im Gegensatz zum Stand der Technik entfallen überdies die Verschraubungen zwischen den Profilen. Derartige Verschraubungen stellen stets besonders kritische Hitzebrücken dar.

Bei der Brandschutzverglasung gemäß der Erfindung wird die der Stoßfläche der Brandschutzscheibe gegenüberliegende Fläche durch die benachbarte raumbegrenzende Struktur gebildet, bei der es sich z.B. um eine weitere Brandschutzscheibe der Brandschutzverglasung handeln kann. Im Bereich der Stoßflächen der Brandschutzscheibe befinden sich also keine weiteren Rahmenteile, vielmehr wird die dort ausgebildete Fuge im Brandfall durch das aus der Brandschutzscheibe austretende, aufschäumende Mittel feuer- und rauchdicht verschlossen. Auch an dieser Stelle fehlen also kritische Wärmebrücken.

Die Erfindung läßt sich zum einen bei solchen Brandschutzverglasungen durchführen, bei denen die benachbarte raumbegrenzende Struktur durch eine weitere Brandschutzscheibe gebildet ist. In diesem Fall befindet sich die Fuge zwischen den Stoßflächen beider Brandschutzscheiben. Diese Fuge ist dann seitlich durch die Profile abgedeckt.

Zum anderen läßt sich die Erfindung bei einer Ausführungsvariante der Brandschutzverglasung verwirklichen, bei der die benachbarte raumbegrenzende Struktur durch eine Wand, einen Boden oder eine Decke gebildet ist. In diesem Fall werden die Profile an der raumbegrenzenden Struktur befestigt, wozu insbesondere Metallspreizdübel Verwendung finden können.

Eine besonders stabile und formschöne Brandschutzverglasung wird erreicht, indem die Profile als Stahlhohlprofile ausgebildet sind. Bei einer bevorzugten Ausgestaltung sind die Profile unverkleidet. In anderen Ausgestaltungen werden aus Holz bestehende Abdeckprofile verwendet. Sie können zur Anpassung an die jeweilige Umgebung ohne weiteres lackiert werden und es ist auch eine Oberflächenbehandlung möglich.

Ausführungsbeispiele einer erfindungsgemäßen Brandschutzverglasung werden nachfolgend anhand der Zeichnung beschrieben. In der Zeichnung zeigt:
- Fig. 1: drei Brandschutzverglasungen nach dem Stand der Technik schematisch in Draufsicht;
- Fig. 2: in einer Ansicht einen Teil einer erfindungsgemäßen Brandschutzverglasung;
- Fig. 3: einen verkürzten Schnitt gemäß Linie III-III der Fig. 2;
- Fig. 4: einen Teilschnitt gemäß Linie IV-IV der Fig. 2 in zwei Ausführungsformen und
- Fig. 5: eine Explosionsskizze zur Verdeutlichung der Glashalterung zur Montage.

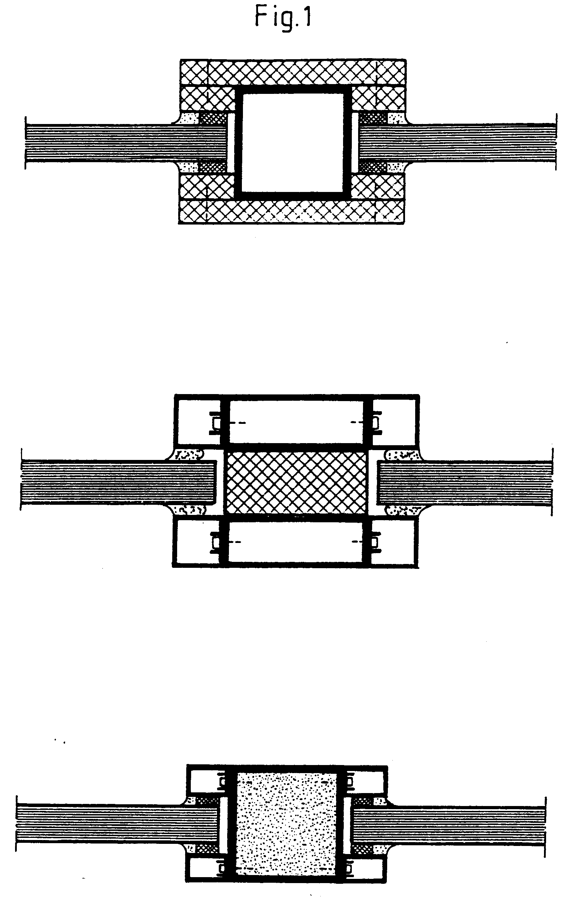

Fig. 1 der Zeichnung zeigt drei Ausführungsformen bekannter Brandschutzverglasungen gemäß Stand der Technik. Bei der obersten Ausführungsform ist eine geschweißte Stahlrahmenkonstruktion verwendet, die beidseitig der Scheiben durch nicht brennbares bzw. schwer entflammbares Material, das kreuzgestrichelt dargestellt ist, zur Erfüllung der Brandschutzanforderungen geschützt ist. Bei der mittig angeordneten Ausführungsform einer Brandschutzverglasung zum Stand der Technik ist der Raum zwischen den beiden Brandschutzscheiben, die wiederum in einer Stahlprofilhalterung angeordnet sind, durch eine eingelegte Leiste aus nicht brennbarem bzw. schwer entflammbarem Material ausgefüllt.

Bei der untersten Ausführungsform einer Brandschutzverglasung zum Stand der Technik wird im Bereich zwischen den in Stahlprofilen gehaltenen Brandschutzscheiben eine im Brandfall kühlende Masse angeordnet, die durch Abgabe von Feuchtigkeit eine Verdunstungskühlung bewirkt, um den Durchtritt von Flammen, Rauch und das Entstehen unzulässiger Temperaturen auf der Brand abgewandten Seite der Verglasung zu vermeiden.

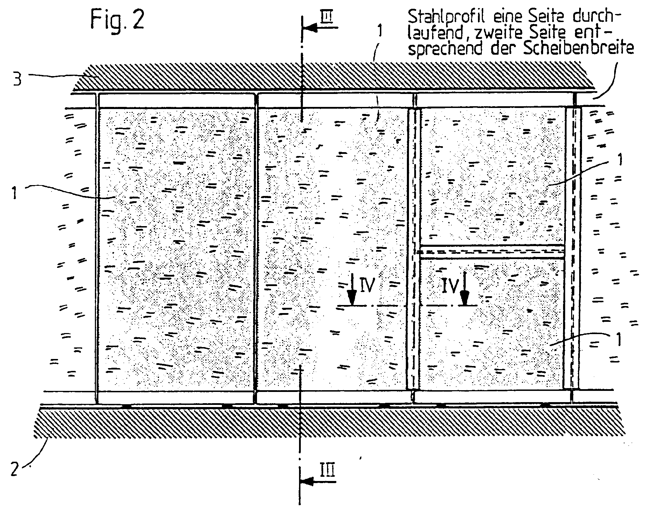

Die demgegenüber wesentlich vereinfachte Ausführungsform einer Brandschutzverglasung gemäß der Erfindung ist in den Figuren 2 bis 5 dargestellt. Dabei weist die Brandschutzverglasung der Fig. 2 mehrere aus Brandschutzscheiben 1 bestehende Glasflächen auf und ist an ihrer Unter- sowie Oberkante mit weiteren raumbegrenzenden Strukturen, nämlich einem Boden 2 und einer Decke 3 verbunden. Bei den Brandschutzscheiben 1 handelt es sich um ein Spezialverbundglas, welches aus mehreren Glasscheiben mit dazwischen angeordneten Brandschutzschichten besteht. Im Brandfall werden diese Brandschutzschichten aktiviert, wobei sie Wärmestrahlung absorbieren und so eine wirksame Dämmschicht bilden, welche den Durchgang von Feuer und Rauch verhindert. Dabei führt die Aktivierung der Brandschutzschichten im Brandfall dazu, daß diese aufschäumen und eine Trübung annehmen, so daß praktisch eine undurchsichtige Feuerschutzwand entsteht.

In Fig. 2, 3 und 4 ist dargestellt, daß einige der Flachseiten der Brandschutzscheiben 1 im Bereich ihres Randes mit Profilen 4a, 4b, 4c versehen sind, welche teilweise den Außenrahmen der Brandschutzverglasung bilden, teilweise aber auch die Stoßflächen aneinandergrenzender Brandschutzscheiben 1 abdecken.

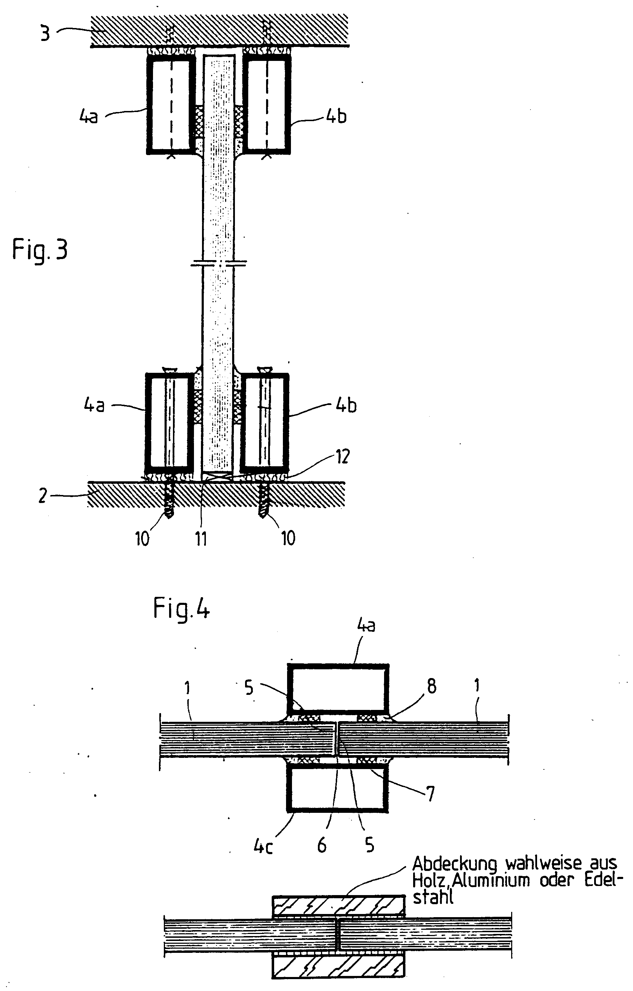

Die Gestaltung der Brandschutzverglasung im Bereich aneinander angrenzender Brandschutzscheiben 1 ist in Fig. 4 dargestellt. Die offenen Stoßflächen 5 der Brandschutzscheiben 1 liegen einander unter Bildung einer schmalen Fuge 6 gegenüber. Die Fuge 6 ist beidseitig durch die Profile 4a/4c abgedeckt, welche gleichmäßig weit über die Ränder beider Brandschutzscheiben 1 reichen. In den Spalten zwischen den Rändern der Brandschutzscheiben 1 und den Innenflächen der Profile 4a/4c befinden sich jeweils Elastozellbänder 7, wobei diese Spalte in Richtung auf die Scheibenmitte zusätzlich mit einer Dichtungsmasse 8 aus Silikon-Kautschuk abgedichtet sind.

Im Brandfall wird infolge der Erhitzung der Brandschutzscheiben 1 die darin befindliche Brandschutzschicht aufgeschäumt, wobei Material dieses Schaumes aus den Stoßflächen 5 der Brandschutzscheiben 1 austritt und die Fuge 6 verschließt, so daß Flammen, Rauch und Wärme nicht mehr hindurchgelangen können. Die Profile schützen gegen einen anfänglichen Durchtritt von Flammen, Rauch und Hitze in den ersten Minuten eines Brandfalles bis der Fugenverschluß durch das aufschäumende Mittel der Verfärbung diese Funktion übernimmt. Darüber hinaus dienen die Profile der optischen Gliederung der Brandschutzverglasung und in zweiter Linie einer Randversteifung der mit einer Dicke zwischen 15 und 45 mm eine ausreichende Eigensteifigkeit aufweisenden Brandschutzscheiben 1. Die vorangehend beschriebene Abdichtung im Brandfall wird daher im Prinzip auch ohne die Profile 4a/4c erreicht, weswegen in Fig. 2 die Stoßflächen zwischen den beiden links angeordneten Brandschutzscheiben 1 unverdeckt dargestellt sind.

Bei dem in Fig. 3 dargestellten Ausführungsbeispiel einer Brandschutzverglasung befindet sich die Fuge 6 nicht zwischen einer Brandschutzscheibe 1 und einer weiteren raumbegrenzenden Struktur in Form einer Brandschutzscheibe, wie bei dem Ausführungsbeispiel nach Fig. 4, sondern zwischen der Brandschutzscheibe 1 und einem Boden 2 bzw. einer Decke 3. In diesem Fall bilden also Boden 2 bzw. Decke 3 die raumbegrenzenden Strukturen. Ein weiterer Unterschied zu dem Ausführungsbeispiel nach Fig. 4 besteht bei der Ausführung nach Fig. 3 darin, daß die Profile 4a, 4b zusätzlich Befestigungszwecken dienen. Hierzu sind die wandseitigen Profile 4a, 4b über die Profile 4a, 4b vertikal durchdringende Schrauben 9 mittels Dübel 10 im Mauerwerk des Bodens 2 verankert. Deckenseitig ist die Brandschutzscheibe 1 in analoger Weise verankert. Entsprechend der Variante nach Fig. 2 befinden sich zwischen den Profilen 4a, 4b und den Rändern der Brandschutzscheibe 1 Elastozellbänder 7 sowie Dichtungsmassen 8. Zur Auflage der Brandschutzscheibe 1 auf dem Boden 2 und zur Wahrung der dortigen Fuge 6 ist die Brandschutzscheibe 1 in diesem Bereich mit Holzklötzchen 11 unterlegt. Restspalte zwischen den Profilen 4a, 4b und dem Boden 2 bzw. der Decke 3 können mit Mineralwolle 12 ausgestopft werden.

Die Wirkungsweise der Brandschutzverglasung nach Fig. 3 entspricht der vorangehend beschriebenen Wirkungsweise, d.h. im Brandfall tritt Schaum aus den Stoßflächen 5 der Brandschutzscheibe 1 aus und verschließt die Fugen 6.

Zur Verbesserung der Montage der Brandschutzverglasung nach Fig. 3 sind die in Fig. 3 rechts dargestellten Profile 4b als durchgehende Profile ausgebildet, welche sich jeweils über die Breite aller an den Boden 2 bzw. die Decke 3 angrenzenden Brandschutzscheiben 1 erstreckt. Demgegenüber entspricht die Länge der Profile 4a jeweils nur der Breite der jeweiligen Brandschutzscheibe 1. Bei der Montage der Brandschutzverglasung werden daher zunächst die durchgehenden Profile 4b verankert, dann die Brandschutzscheiben 1 eingesetzt und diese schließlich durch die kurzen Profile 4a in ihrer Lage fixiert.

Die Profile 4a, 4b sind bei den Ausführungsbeispielen als Stahlhohlprofile ausgebildet. Da es für die brandtechnische Funktion der Brandschutzverglasung nicht auf das Material der Profile ankommt, sind andere Materialien, wie Aluminium oder Holz, gleichfalls geeignet.

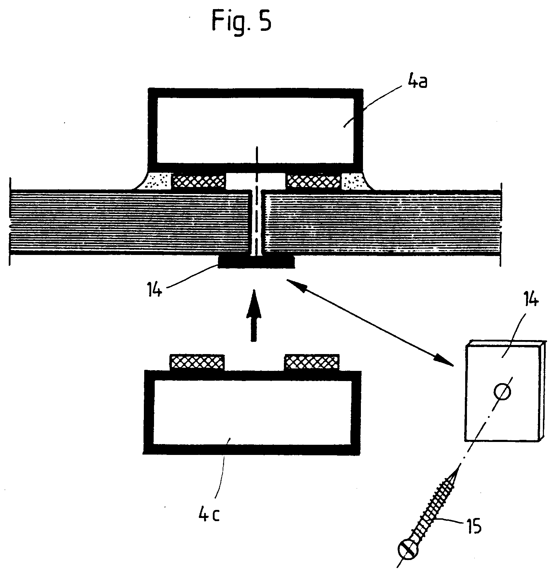

Zur Montage der in den Figuren 2 bis 4 dargestellten Brandschutzverglasung der Erfindung ist gemäß Fig. 5 der Zeichnung vorgesehen, die beiden benachbart angeordneten Brandschutzscheiben unter Belassung einer Fuge von kleiner 6 mm, vorzugsweise kleiner gleich 4 mm nebeneinander anzuordnen und am Profil 4a unter Zwischenschaltung der Elastozellbänder 7 anzulehnen. Es werden dann in Abständen zueinander angeordnete Sicherungsplättchen 14 mittels Stiften 15, die die Fuge zwischen den Brandschutzscheiben durchgreifen, mit dem Profil 4a verschraubt, um die Gegenhaltung der Brandschutzscheiben zu gewährleisten. Anschließend wird die Fugenabdeckung mit dem Gegenprofil 4c vorgenommen, dessen Elastozellbänder derart in einem Abstand zueinander angeordnet sind, daß die Sicherungsplättchen 14 zwischen sie passen. Als abschließende Maßnahme kann dann die Abdichtung mittels Dichtungsmasse 8 vorgenommen werden.

### Bezugszeichenliste

- 1: Brandschutzscheibe
- 2: Boden
- 3: Decke
- 4a: Profil
- 4b: Profil
- 4c: Abdeckprofil
- 5: Stoßfläche
- 6: Fuge
- 7: Elastozellband
- 8: Dichtungsmasse
- 9: Schraube
- 10: Metallspreizdübel
- 11: Holzklötzchen
- 12: Mineralwolle
- 13: Winkelstück
- 14: Sicherungsplättchen
- 15: Stifte

## Patentansprüche

1. Brandschutzverglasung zur Vermeidung des Durchtritts von Feuer und Rauch im Brandfall aus einem Raum in einen anderen, mit mindestens einer Brandschutzscheibe, deren Rand zu beiden Seiten durch jeweils ein Profil abgedeckt ist, wobei zwischen der Stoßfläche der Brandschutzscheibe und der gegenüberliegenden Fläche eine Fuge verbleibt, die im Brandfall durch ein in der Brendschutzscheibe als Schutzwirkstoff enthaltenes, aufschäumendes Mittel feuer- und rauchdicht verschlossen wird,
**dadurch gekennzeichnet**,
daß die beiden Profile (4a,4b,4c) ausschließlich über die als Isolierschicht dienende Brandschutzscheibe (1) selbst miteinander verbunden sind, wobei die der Stoßfläche (5) gegenüberliegende Fläche durch die benachbarte raumbegrenzende Struktur gebildet wird, z.B. eine weitere Brandschutzscheibe (1) der Brandschutzverglasung oder Decke (3), Wand oder Boden (2) des umgebenden Raumes.

2. Brandschutzverglasung nach Anspruch 1, dadurch gekennzeichnet, daß zwei Brandschutzscheiben (1) unmittelbar fluchtend zueinander angeordnet sind und in ihrer Position beidseitig derart gehalten sind, daß die zwischen ihren Stoßflächen (5) ausgebildete Fuge (6) im Brandfall durch das aufschäumende Mittel der Brandschutzscheiben (1) feuer- und rauchdicht verschlossen wird.

3. Brandschutzverglasung nach Anspruch 1 und 2, dadurch gekennzeichnet, daß die Fugenbreite kleiner 6 mm, vorzugsweise kleiner gleich 4 mm beträgt.

4. Brandschutzverglasung nach einem der Ansprüche 1 bis 4, dadurch gekennzeichnet, daß die Brandschutzscheibe (1) einseitig durch Sicherungsmittel (14,15) an den Profilen (4a) gehalten ist.

5. Brandschutzverglasung nach Anspruch 4, dadurch gekennzeichnet, daß die Sicherungsmittel aus Sicherungsplättchen (14) bestehen, die mittels die Fuge (6) zwischen zwei benachbarten Brandschutzscheiben (1) durchgreifenden Stiften (15) mit dem Stahlhalteprofil (4a) verschraubbar sind.

6. Brandschutzverglasung nach Anspruch 4 und 5, dadurch gekennzeichnet, daß die Profile (4a,4b,4c) als Stahlhohlprofile ausgebildet sind.

7. Brandschutzverglasung nach einem der Ansprüche 4 bis 6, dadurch gekennzeichnet, daß die Profile (4a,4b) unverkleidet sind.

8. Brandschutzverglasung nach einem der Ansprüche 1 bis 7, dadurch gekennzeichnet, daß die Brandschutzscheibe (1) auch wandseitig, bodenseitig oder deckenseitig unter Bildung einer schmalen Fuge angeordnet ist und die Profile (4a,4b) an Wand, Boden oder Decke durch Spreizdübel (10) befestigt sind.

## Claims

1. Fire protection glazing for avoiding the passage of fire and smoke in the event of fire from one room into another, having at least one fire protection pane, the edge of which is covered on both sides in each case by one profile, a gap remaining between the abutting surface of the fire protection pane and the opposing surface which in the event of fire is sealed in a fireproof and smokeproof manner by a foaming means contained in the fire protection pane as protective active substance, characterised in that the two profiles (4a, 4b, 4c) are connected to one another only via the fire protection pane (1) itself serving as insulating layer, the surface opposite the abutting surface (5) being formed by the neighbouring space-limiting structure, for example a further fire protection pane (1) of the fire protection glazing or cover (3), wall or base (2) of the surrounding space.

2. Fire protection glazing according to claim 1, characterised in that two fire protection panes (1) are arranged directly flush to one another and are mounted in their position on both sides such that the gap (6) formed between their abutting surfaces (5) is sealed in a fireproof and smokeproof manner by the foaming means of the fire protection panes (1) in the event of fire.

3. Fire protection glazing according to claim 1 and 2, characterised in that the gap width is less than 6 mm, preferably less than 4 mm.

4. Fire protection glazing according to one of claims 1 to 4, characterised in that the fire protection pane (1) is mounted on the profiles (4a) on one side by means of security means (14, 15).

5. Fire protection glazing according to claim 4, characterised in that the security means consist of security platelets (14) which can be screwed to the steel retaining profile (4a) by means of pins (15) penetrating the gap (6) between two neighbouring fire protection panes (1).

6. Fire protection glazing according to claim 4 and 5, characterised in that the profiles (4a, 4b, 4c) are designed as steel hollow profiles.

7. Fire protection glazing according to one of claims 4 to 6, characterised in that the profiles (4a, 4b) are unlined.

8. Fire protection glazing according to one of claims 1 to 7, characterised in that the fire protection pane (1) is also arranged on the wall side, the base side or the cover side while forming a narrow gap, and the profiles (4a, 4b) are attached to wall, base or cover by means of straddling dowel (10).

## Revendications

1. Vitrage coupe-feu destiné à éviter, en cas d'incendie, la propagation du feu et de la fumée d'une pièce dans l'autre, comprenant au moins une vitre coupe-feu dont chacun des bords est recouvert, de part et d'autre, par un profilé, entre la face frontale de la vitre coupe-feu et la surface opposée subsistant un joint qui, en cas d'incendie, est rempli par un agent moussant qui est contenu dans la vitre coupe-feu sous forme d'agent actif protecteur et qui fait obstacle au feu et à la fumée, caractérisé en ce que les deux profilés (4a, 4b, 4c) ne sont reliés l'un à l'autre que par la vitre coupe-feu (1) proprement dite faisant fonction de couche isolante, la surface opposée à la face frontale (5) étant formée par la structure voisine délimitant l'espace, par exemple par une autre vitre coupe-feu (1) du vitrage coupe-feu ou par le plafond (3), le mur ou le sol (2) de la pièce environnante.

2. Vitrage coupe-feu selon la revendication 1, caractérisé en ce que deux vitres coupe-feu (1) sont disposées directement dans l'alignement l'une de l'autre et maintenues en position de part et d'autre de façon que, en cas d'incendie, le joint (6) ménagé entre leurs faces frontales (5) soit obturé par l'agent moussant des vitres coupe-feu (1) de manière étanche au feu et à la fumée.

3. Vitrage coupe-feu selon la revendication 1 et 2, caractérisé en ce que la largeur du joint est inférieure à 6 mm et, de préférence, inférieure ou égale à 4 mm.

4. Vitrage coupe-feu selon l'une des revendications 1 à 4, caractérisé en ce que, sur l'un de ses côtés, la vitre coupe-feu (1) est maintenue contre les profilés (4a) par des moyens d'arrêt (14, 15).

5. Vitrage coupe-feu selon la revendication 4, caractérisé en ce que les moyens de blocage sont constitués de plaquettes d'arrêt (14) qui sont vissées avec le profilé métallique d'appui (4a) au moyen de broches (15) qui traversent le joint (6) ménagé entre deux vitres coupe-feu voisines (1).

6. Vitrage coupe-feu selon les revendications 4 et 5, caractérisé en ce que les profils (4a, 4b, 4c) sont conçus sous la forme de profilés métalliques creux.

7. Vitrage coupe-feu selon l'une des revendications 4 à 6, caractérisé en ce que les profilés (4a, 4b) sont dépourvus de revêtement.

8. Vitrage coupe-feu selon l'une des revendications 1 à 7, caractérisé en ce qu'au niveau du mur, du sol ou du plafond, la vitre coupe-feu (1) est également posée en ménageant un joint étroit, et en ce que les profilés (4a, 4b) sont fixés au mur, au sol ou au plafond par des chevilles à expansion (10).
